# EUROPEAN PATENT APPLICATION

(11) **EP 1 331 802 A1**
(43) Date of publication of application: **30.07.2003**
(21) Application number: 03001795.8
(22) Date of filing: 28.01.2003
(51) Int. Cl.: H04N 1/21

(54) **Method of recording still pictures onto a recording medium**

(30) Priority: 28.01.2002 KR 2002004877
(71) Applicant: LG ELECTRONICS INC., Seoul 150-010 (KR)
(72) Inventor: Um, Soung Hyun, Kyunggi-do, 431-050 (KR); Seo, Kang Soo, Dongan-gu, Anyang, Kyunggi-do, 431-075 (KR); Kim, Byung Jin, Bundang-gu, Sungnam, Kyunggi-do, 463-010 (KR)
(74) Representative: DIEHL GLAESER HILTL & PARTNER

(57) **Abstract**

The present invention relates to a method of grouping still pictures recorded on a recording medium for the purpose of efficient management. The present method records still pictures onto a recording medium, groups the recorded still pictures based on their attributes and attributes of recorded audio data associated with respective still pictures, creates management information about each still-picture group, and writes the group management information onto the recording medium. Owing to the recorded group management information, a user can find easily and rapidly many still pictures on a recording medium that have been obtained in same photographing condition.

## Description

### BACKGROUND OF THE INVENTION

### Field of the Invention

The present invention relates to a method of grouping still pictures recorded on a recording medium for the purpose of efficient management.

### Description of the Related Art

A disk-type recording medium such as a compact disk (CD) can store high-quality digital audio data permanently, so that it is very popular recording medium. Recently, a digital versatile disk (referred as 'DVD' hereinafter) has been developed as a new disk-type recording medium. A DVD can store much larger size than a CD, thus, high-quality moving picture or audio data are recorded on a DVD for much longer time. Therefore, a DVD will be used widely in the near future.

There are three types of a DVD, DVD-ROM for read-only, DVD-R for write-once, and DVD-RAM or DVD-R/W for rewritable. For a rewritable DVD, the standardization of data writing format is in progress.

Recently, a Digital Still Camera (DSC) being capable of storing a taken picture in digital data has been developed. Such a DSC usually has a memory chip of large storage capacity so that it can take high-quality pictures and store audio data associated with the stored pictures as well. In a DSC, the taken pictures are encoded in the format of JPEG, or TIFF while the audio data are done in the format of PCM, u-Law PCM, or IMA-ADPCM.

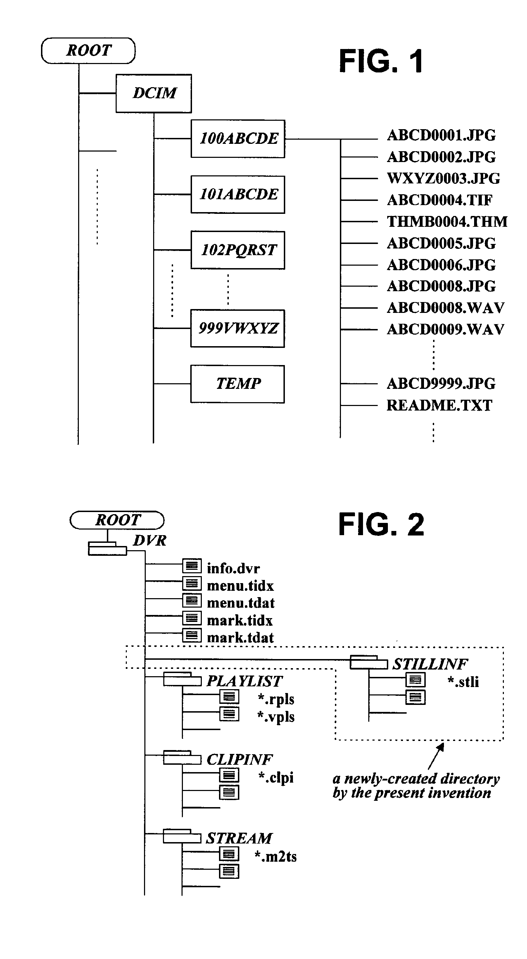

A DSC has a well-known file system called 'DCF' (Design rule for Camera File system) for recording still pictures and audio data. Fig. 1 shows an illustrative DCF. In the structure of DCF, a DCIM (Digital Camera IMages) directory exists under a root directory and many subdirectories may exist under the DCIM. Each subdirectory has 8-digit-long filename that is composed of three numeric digits and five character digits. The three numeric digits should be unique, for instance, one among 100∼999, and the five character digits are arbitrarily chosen by a user. Because the three numeric digits are unique the subdirectories can be created up to 900.

A subdirectory, e.g., subdirectory '100ABCDE' of Fig. 1 can accommodate many data files of which filename is 8-digits long. The filename is composed of four numeric digits and four character digits. While the four character digits are chosen by a user the four numeric digits should be unique among data files if their attributes are different. The data files are still pictures and/or audio files, respectively. The still picture files have extension of 'JPG' or 'TIF' while the audio files encoded by PCM, u-Law PCM or IMA-ADPCM have extension of 'WAV'. The filenames of the data files can be same if their extensions are different. Therefore, when a picture file is to be dubbed with audio, a dubbed audio file can be linked with the picture file only if their filenames are made same.

By the way, a digital video recorder (DVR) records video and audio data in a file structure shown in Fig. 2. The file structure of Fig. 2 has a DVR directory under a root directory. The DVR directory includes a menu file 'menu.tdat', a mark file 'mark.tdat', and their index files 'menu.tidx' and 'mark.tidx'. The menu and the mark file have menu data and mark data respectively and the index files have search data to index menu and mark data in the menu and the mark file.

The 'DVR' directory is mandatory for motion picture recording of a DVR. The 'DVR' directory has directories 'PLAYLIST', 'CLIPINF', and 'STREAM'. The 'PLAYLIST' directory includes playlist files (*.rpls,*.vpls) containing motion-picture and still-picture play items and title management information. The directory 'CLIPINF' includes clip information files (*.clpi) containing information on movie stream management and movie attribute and the directory 'STREAM' includes stream files (*.m2ts) containing actual motion-picture data stream packets.

However, it is obvious that many still pictures under the file system of Fig. 1 obtained with a DSC are moved to a recording medium of very large capacity because of relatively small storage capacity of a DSC. That is, numerous still pictures taken by a DSC will be recorded onto a large-capacity recording medium through a DVR being capable of recording data onto that medium. This fact strongly demands a DVR to use an efficient still-picture management method.

### SUMMARY OF THE INVENTION

It is an object of the present invention to provide several methods that group recorded still pictures based on their attributes and create management information of each group to record onto a recording medium.

A method of recording a still picture onto a recording medium in accordance with the present invention is characterized in that it comprises the steps of: recording still pictures onto a recording medium, grouping the recorded still pictures based on their attributes and attributes of recorded audio data associated with respective still pictures, creating management information about each still-picture-group, and writing the group management information onto the recording medium.

### BRIEF DESCRIPTION OF THE DRAWINGS

The accompanying drawings, which are included to provide a further understanding of the present invention, illustrate the preferred embodiments of the invention, and together with the description, serve to explain the principles of the present invention, and wherein:
Fig. 1 shows an illustrative DCF (Design rule for Camera File system) adopted by a digital still camera;
Fig. 2 shows an illustrative file system adopted by a digital video recorder;
Fig. 3 is a block diagram of a disk device which a method of recording still pictures onto a rewritable recording medium in accordance with the present invention is embedded in;
Figs. 4 to 7 show a schematic still-picture recording process and group management information related with still picture grouping in accordance with the first embodiment of the present invention;
Figs. 8 to 10 show a schematic still-picture recording process and group management information related with still picture grouping in accordance with the second embodiment of the present invention;
Fig. 11 shows a file recording example and partial group management information related with still picture grouping in accordance with the third embodiment of the present invention;
Figs. 12 to 14 show a schematic still-picture recording process and group management information related with still picture grouping in accordance with the fourth embodiment of the present invention; and
Figs. 15 to 18 show a schematic still-picture recording process and group management information related with still picture grouping in accordance with the fifth embodiment of the present invention.

### DETAILED DESCRIPTION OF THE PREFFERRED EMBODIMENT

In order that the present invention may be fully understood, a preferred embodiment thereof will now be described with reference to the accompanying drawings.

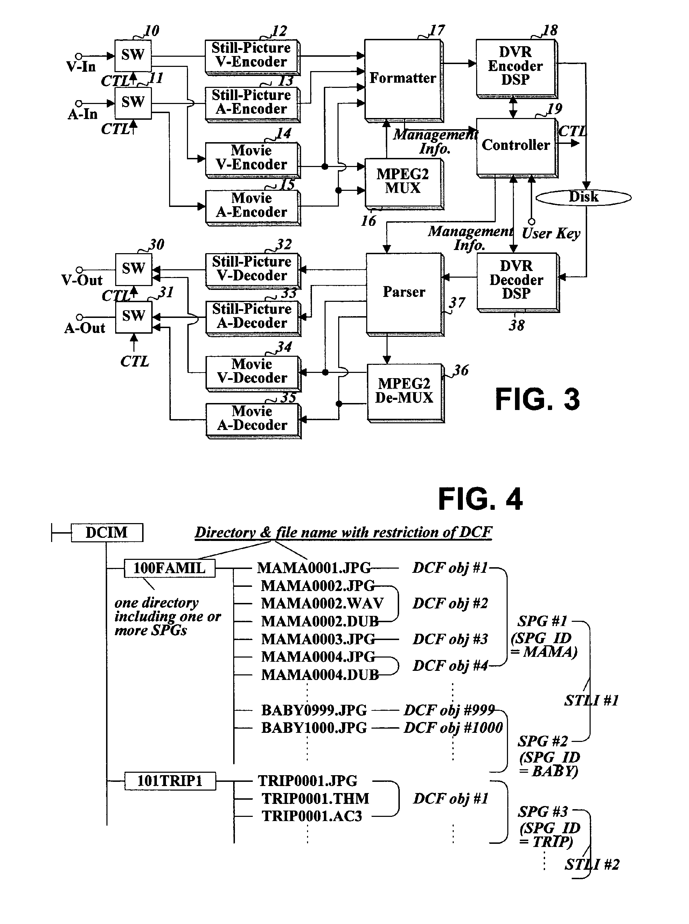

Fig. 3 is a block diagram of a disk device which a method of recording still pictures onto a rewritable recording medium in accordance with the present invention is embedded in.

The disk device of Fig. 3, e.g., a DVR can record video/audio data and management information for searching and reproduction control onto a rewritable recording medium.

The disk device comprises, as shown in Fig. 3, an input processing module, an output processing module, and a controller 19 conducting overall system control. The input processing module is composed of two input switching units 10 and 11, a still picture video 12 and a still picture audio encoder 13, a movie video 14 and a movie audio encoder 15, an MPEG 2 muxer 16, a formatter 17, and a DVR encoding DSP 18 while the output processing module is composed of two output switching units 30 and 31, a still picture video 32 and a still picture audio decoder 33, a movie video 34 and a movie audio decoder 35, an MPEG 2 demuxer 36, a parser 37, and a DVR decoding DSP 38.

The two input switching units 10 and 11 selectively connect their input signals to the still picture video 12 and the still picture audio encoder 13 or the movie video 14 and the movie audio encoder 15 in response to a switching control 'CTL' of the controller 19. The still picture encoders 12 and 13 encode video data from the first switching unit 10 to JPEG or TIFF format and audio data from the second switching unit 11 to PCM, u-Law PCM, or IMA-ADPCM format, respectively as a DSC does.

The movie encoders 14 and 15 encode video data from the first switching unit 10 to MPEG 2 format and audio data from the second switching unit 11 to AC-3, MPEG 1 layer 2, or LPCM format, respectively. The MPEG 2 muxer 16 multiplexes the encoded video and audio data from the movie video 14 and the movie audio encoder 15 to produce MPEG 2 stream that is directed to the formatter 17.

For motion-picture input, a user can set a still-picture recording mode that is supported by a DVR. In that mode, MPEG2-formatted video data and AC3-, MPEG1 layer2-formatted, or LPCM audio data from the movie video 14 and the movie audio encoder 15 are applied to the formatter 17 directly not passing through the MPEG 2 muxer 16. The formatter 17 is able to convert each frame of motion pictures to still picture.

In case that the encoded still picture video and audio data are inputted from the still picture encoders 12 and 13, the formatter 17 segments or groups input data to yield successive data units, adds necessary head information to each data unit, and transmits them sequentially to the DVR encoding DSP 18. The data unit has a size suitable for a recording unit area of a rewritable recording disk. Furthermore, the formatter 17 produces management information for searching for and controlling reproduction of the re-sized still picture video and audio data. The produced management information is delivered to the controller 19.

The formatter 17 also conducts the same resizing and management information creating operation for the still-picture video and audio data that are converted from motion picture data as explained before.

In case that the encoded motion picture video and audio data are inputted from the movie encoders 14 and 15 and the MPEG 2 stream are from the MPEG 2 muxer 16 at the same time, the formatter 17 selects the encoded data or the MPEG 2 stream to segment or group the selected data to yield successive data units, adds necessary head information to each data unit, and transmits them sequentially to the DVR encoding DSP 18. The data unit has a size suitable for a recording unit area of a rewritable recording disk. The formatter 17 also produces management information for searching for and controlling reproduction of the re-sized motion picture video and/or audio data. The produced management information is delivered to the controller 19.

The DVD encoding DSP 18 constructs ECC (Error Correction Code) blocks with the successive data units having still or motion pictures, thumbnails and audio data and then modulates data of ECC blocks to corresponding recording waveforms that will form mark/space patterns on the surface of the rewritable recording disk. At this time, the controller 19 creates management information to group still pictures and associated audio data or thumbnails. The group is determined based on attribute or subject of data objects, namely still pictures and/or audio data.

The created group management information is written in a still-picture information file (*.stli) under a directory 'STILLINF' that is newly defined by the present invention as shown in Fig. 2. And, additional information related with management of still picture groups (SPGs) is created and written in navigation data fields defined for a DVR.

In addition, while or after video and/or audio data are recorded, the controller 19 records the management information received from the formatter 17 or created by itself onto the rewritable recording disk through the DVR encoding DSP 18.

Below described are various still-picture grouping methods conducted by the above-explained recording process.

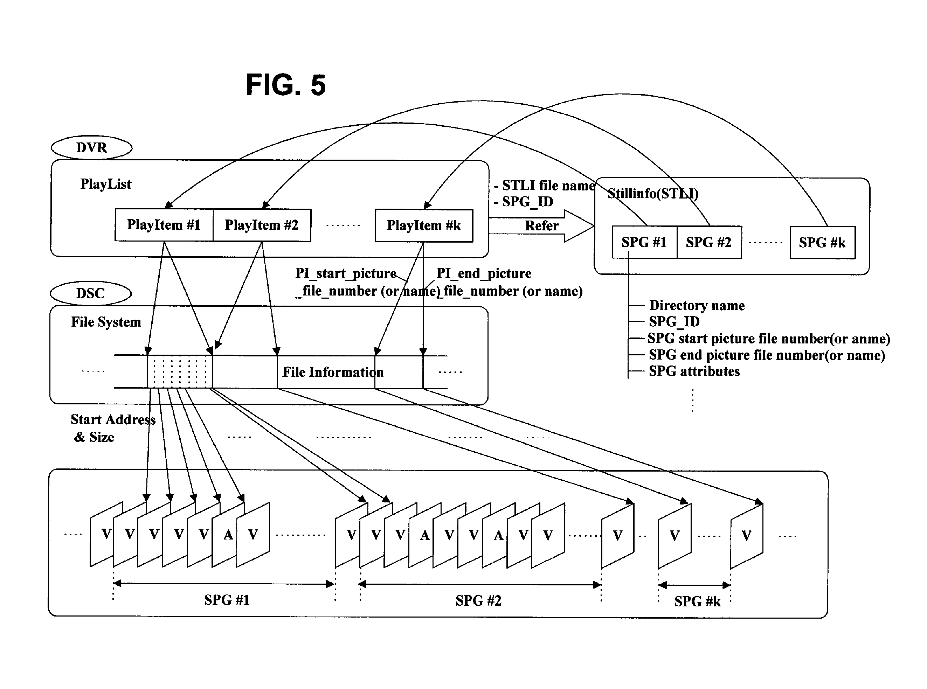

Figs. 4 to 7 show a schematic still-picture recording process and group management information related with still picture grouping in accordance with the first embodiment of the present invention. In this embodiment, the controller 17 records still pictures, and associated audio data and thumbnails, etc. in the DCF structure adopted by a DSC, as shown in Fig. 4. At this time, still pictures and associated audio data and thumbnails with same attribute have same string in their filenames to designate them to a single SPG.

A directory, e.g., '100FAMIL' with three numeric digits and five character digits can include data files belonging to different SPGs. The three numeric digits should be unique, for instance, one among 100∼999, and the five character digits are arbitrarily chosen by a user.

The recorded file has a filename whose length is 8 digits long excluding its extension. The filename is composed of four numeric digits and four character digits. While the four character digits are arbitrarily chosen by a user the four numeric digits should be different from those of other files if file extensions are same.

Explaining the recording example of Fig. 4, the directory '100FAMIL' includes a still picture file 'MAMA0001.JPG', another still picture file 'MAMA0002.JPG', and a real-time audio file 'MAMA0002.WAV' and a dubbed audio file 'MAMA0002.DUB' associated with the file 'MAMA0002.JPG'. A file or files with same filename constitute a DCF object, so that the first DCF object consists of only the file 'MAMA0001.JPG' while the second DCF object consists of three files 'MAMA0002.JPG', 'MAMA0002.WAV' and 'MAMA0002.DUB'.

The files having common 4-character string, e.g., 'MAMA' in their filenames constitute a single SPG and the common string is used as a group identifier.

The group specifying information and attribute information for each SPG are written a still-picture information file (*.stli) under the directory 'STILLINF', as shown in Fig. 5.

The still-picture information file (*.stli) includes, for each SPG, a directory name where the SPG is, a SPG identifier 'SPG_ID', a start and an end file number (or filename) of the SPG, and attribute information of the SPG. The attribute information can be written in a playitem, referring to a SPG, included in a playlist file that is defined by a DVR.

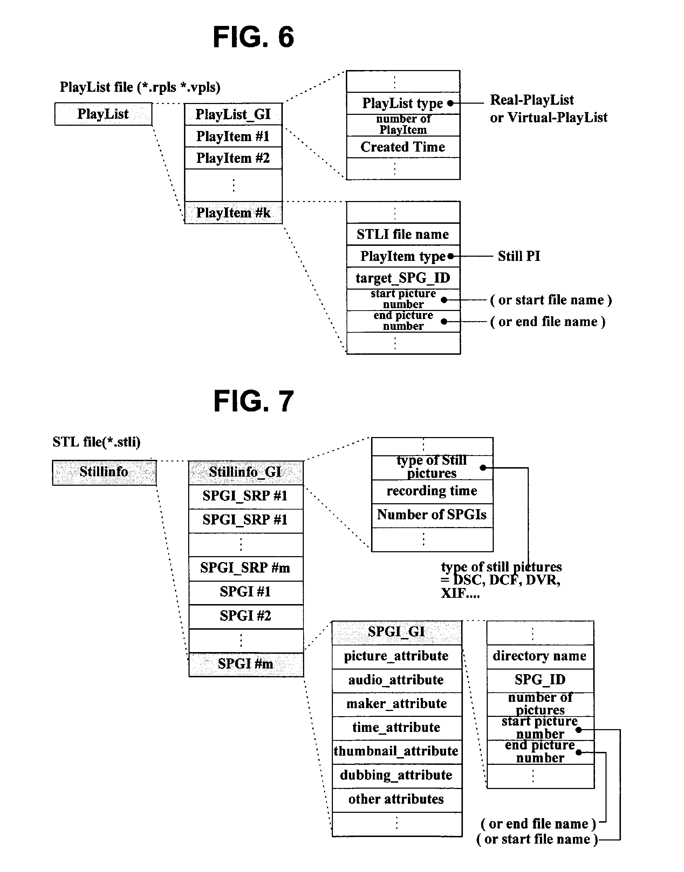

The playlist file (*.rpls,*.vpls) consists of a playlist general information 'PlayList_GI' and a plurality of playitems as shown in Fig. 6. The playlist general information includes a playlist type, the number of playitems, created time, and so on. Each playitem includes filename of an associated still-picture information file, a playitem type, an identifier of a target SPG, and a start and an end picture number (or filename), etc.

The still-picture information file (*.stli) is structure as shown in Fig. 7. The still-picture information file is composed of general information of still-picture information 'Stillinfo_GI', a plurality of SPG information search pointers 'SPGI_SRP #k', and plural pieces of SPG information 'SPGI #k'. The general information of still-picture information 'Stillinfo_GI' includes type of still pictures, recording time, the number of SPGIs, and so on.

Each SPGI, pointed by a SPG information search pointer, includes SPGI general information and an attribute table where respective attributes of picture, audio, maker, time, thumbnail, dubbed audio, and others are written.

The picture attribute includes a coding mode (JPEG/TIFF/MPEG), an aspect ratio (4:3/16:9), a YCrCb sampling rate (4:2:2/4:2:0), a resolution (HDTV:1920x1080/SXGA:1280x960/XGS:1024x768/...), and the audio attribute includes a coding mode (PCM/IMA-ADPCM/AC-3/MPEG1-L2), a sampling rate (8kHz/11.025kHz/48kHz/96kHz/...), the number of channels (1/2/4/5.1/...), and a quantization level (8/16/24bits).

The maker attribute includes manufacturer's code (LG/Samsung/MEI/...), a model name, and a recording source, and the time attribute includes original creation time, etc. The thumbnail attribute is almost similar to the picture attribute and the dubbed audio attribute is almost similar to the audio attribute as well. The other attribute includes important attributes defined in EXIF and DCF format.

The SPGI general information 'SPGI_GI' includes a directory name where a SPG is, a SPG identifier 'SPG_ID', the number of pictures, a start and an end file number (or filename) of the SPG, and so forth.

Using the above-explained management information related with a SPG, still pictures and audio data files belonging to a SPG identified by a SPG identifier 'SPG_ID' and information written in a still-picture information file pointed by a playitem selected from a playlist can be easily found and then presented sequentially.

The attribute information can be included in a still picture and an associated audio file. In this case, an electronic machine having adopted the DSC file system uses the attribute information included in still pictures and their related audio files while another electronic machine having adopted the DVR file system uses the attribute information written in SPG information 'SPGI #k' included in a still-picture information file (*.stli).

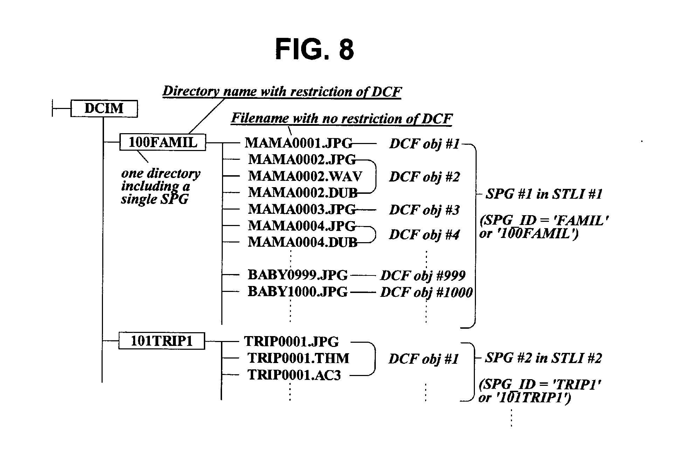

Figs. 8 to 10 show a schematic still-picture recording process and group management information related with still picture grouping in accordance with the second embodiment of the present invention. In this embodiment, the controller 17 records still pictures, and associated audio data and thumbnails, etc. in the DCF structure adopted by a DSC, as shown in Fig. 8. At this time, all still pictures and associated audio data and thumbnails with same attribute are written under a same directory to group all files under a directory to a single SPG. The filename is not restricted contrary to the first embodiment, but the rule of DCF object is still observed.

In this embodiment, the files belonging to same SPG need not have same string in their filenames because all files belonging to same SPG are under a same directory. In the recording example of Fig. 8, the files belonging to the first SPG 'SPG #1' have different strings 'MAMA' and 'BABY' in their filenames.

In addition, a directory name or its last five characters are used as an identifier of a SPG because SPGs are differentiated each other by directories.

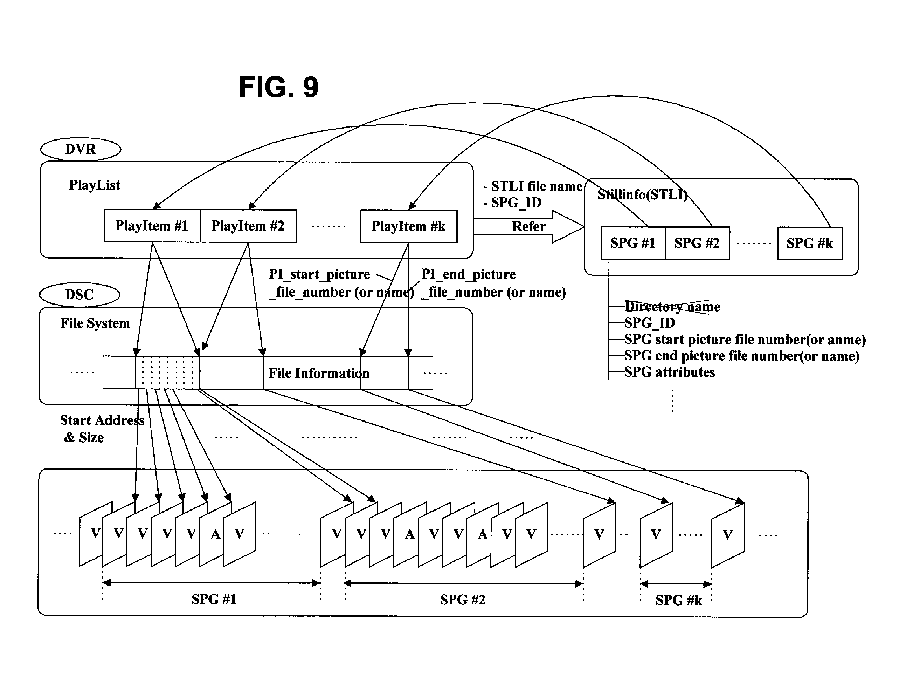

The group specifying information and attribute information for each SPG are written a still-picture information file (*.stli) under the directory 'STILLINF', as shown in Fig. 9. However, unlike the embodiment of Fig. 5, a directory name is not written in the still-picture information file (*.stli) because a directory name is an identifier of a SPG.

The attribute information written in the still-picture information file can be also written in a playitem, related with a SPG, included in a playlist file that is defined by a DVR.

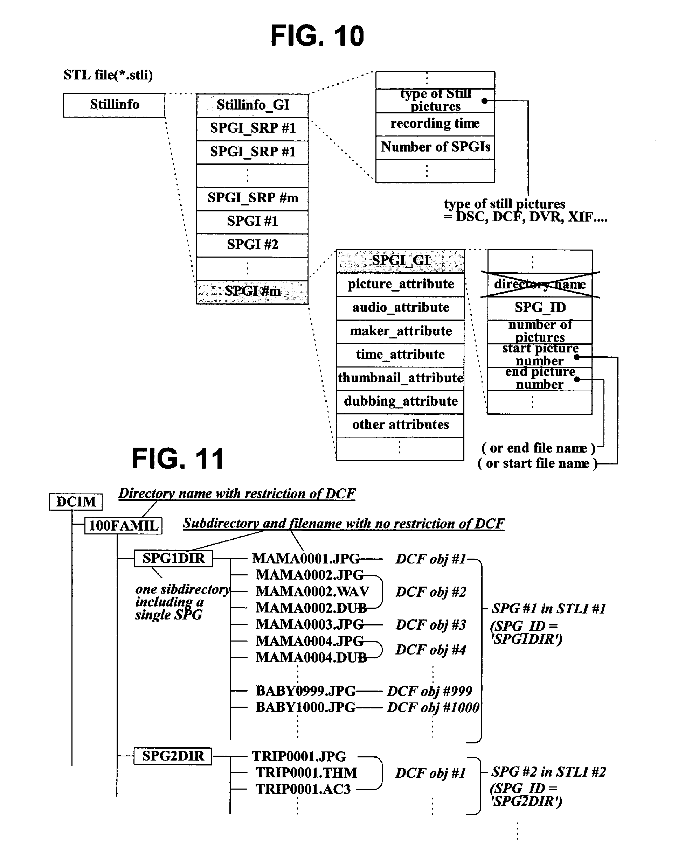

The playlist file (*.rpls,*.vpls) in the second embodiment has totally same structure that the first embodiment has as shown in Fig. 6. The structure of a still-picture information file of this embodiment is also same with the first embodiment except that SPGI general information does not include a directory name field. Fig. 10 shows the structure of a still-picture information file according to the second embodiment.

Fig. 11 shows a file recording example according to the third embodiment of the present invention. This embodiment is totally same with the second embodiment except that a subdirectory to accommodate a single SPG is created under a directory of which name is ruled by DCF. The subdirectory is arbitrarily named by a user without any restriction. Needless to say, a subdirectory pathname is used as an identifier of a SPG.

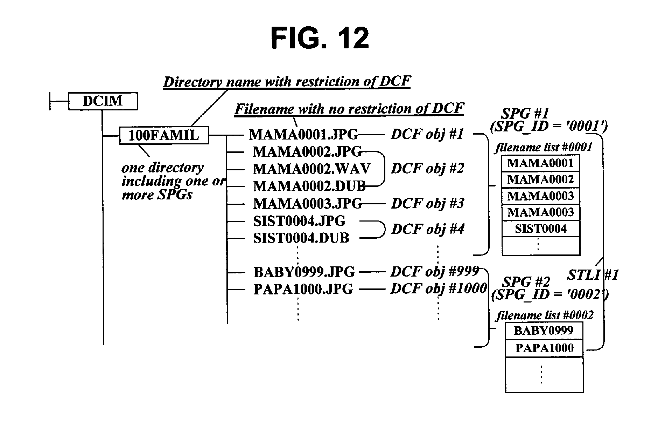

Figs. 12 to 14 show a schematic still-picture recording process and group management information related with still picture grouping in accordance with the fourth embodiment of the present invention. In this embodiment, the controller 17 records still pictures, and associated audio data and thumbnails, etc. in the DCF structure adopted by a DSC, as shown in Fig. 12. At this time, still pictures and associated audio data and thumbnails with same attribute are written under a same directory however they need not a common string in their filenames. The directories are named under the DCF rule however the filenames are named by a user with no restriction of DCF rule.

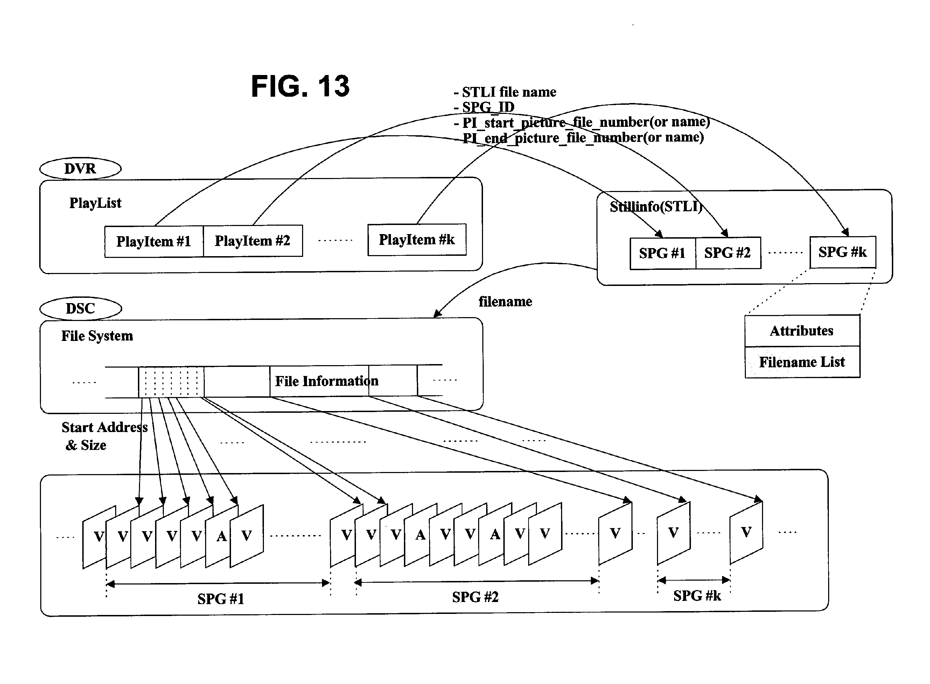

In this embodiment, a plurality of SPGs can be included in a single directory and the files in a same SPG need not have same string in their filenames. Therefore, a file list including filenames belonging to a same SPG must be stored in a SPG management information area, e.g., a still-picture information file, and an identifier of a SPG uses serial number as shown in Fig. 12. Each file list can include file number instead of filename. The still-picture information file (*.stli) includes, for each SPG, attribute information as well as the file list as shown in Fig. 13.

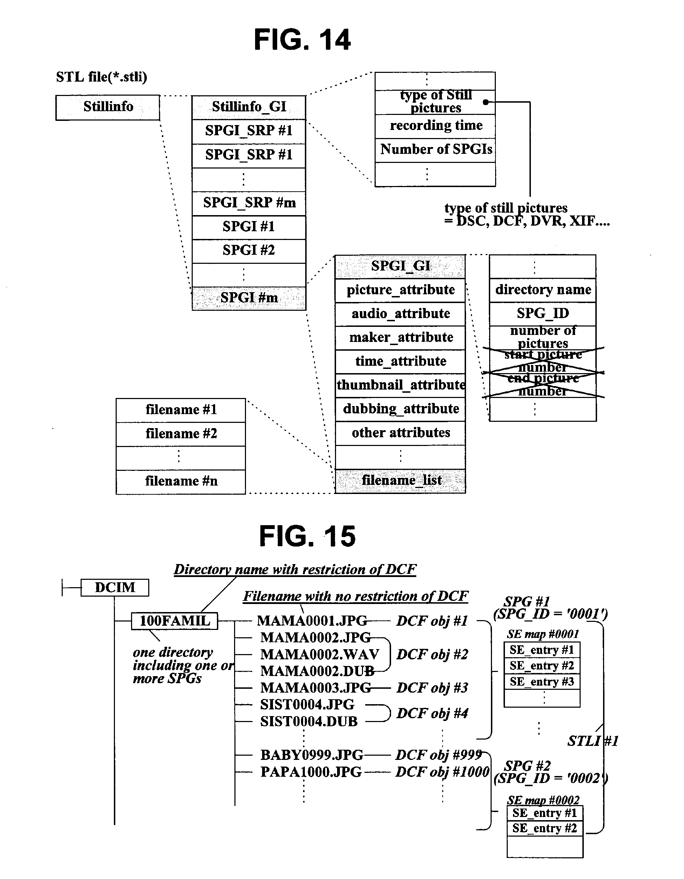

In addition, because the still-picture information file (*.stli) includes a file list in SPG information field, the SPGI general information does not include a start and an end picture number (or filename) field, as shown in Fig. 14.

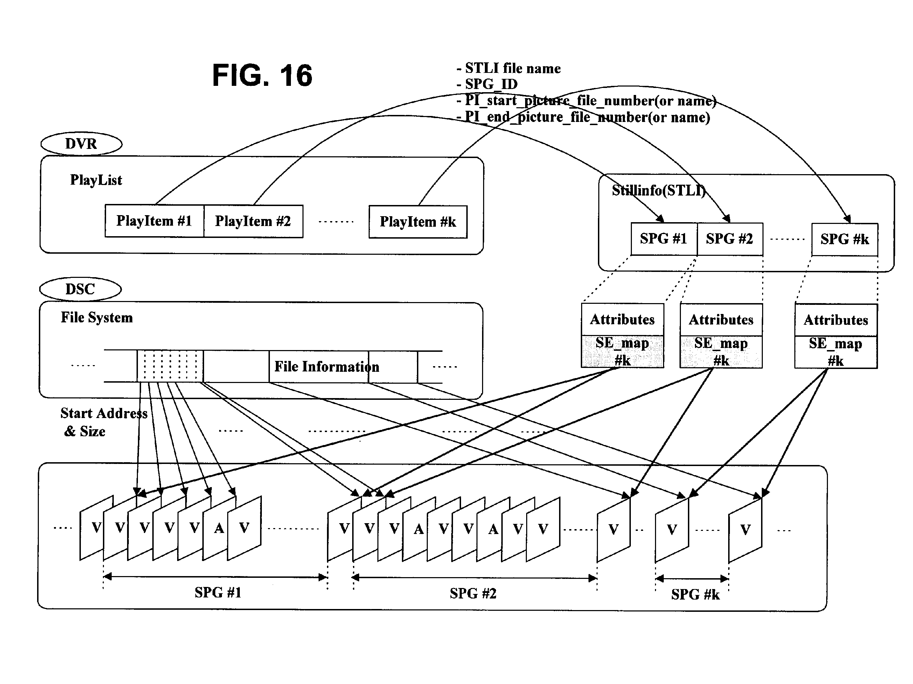

Figs. 15 to 18 show a schematic still-picture recording process and group management information related with still picture grouping in accordance with the fifth embodiment of the present invention. This fifth embodiment is same with the fourth embodiment except that the former has an entry map having information on file entries belonging to a same SPG.

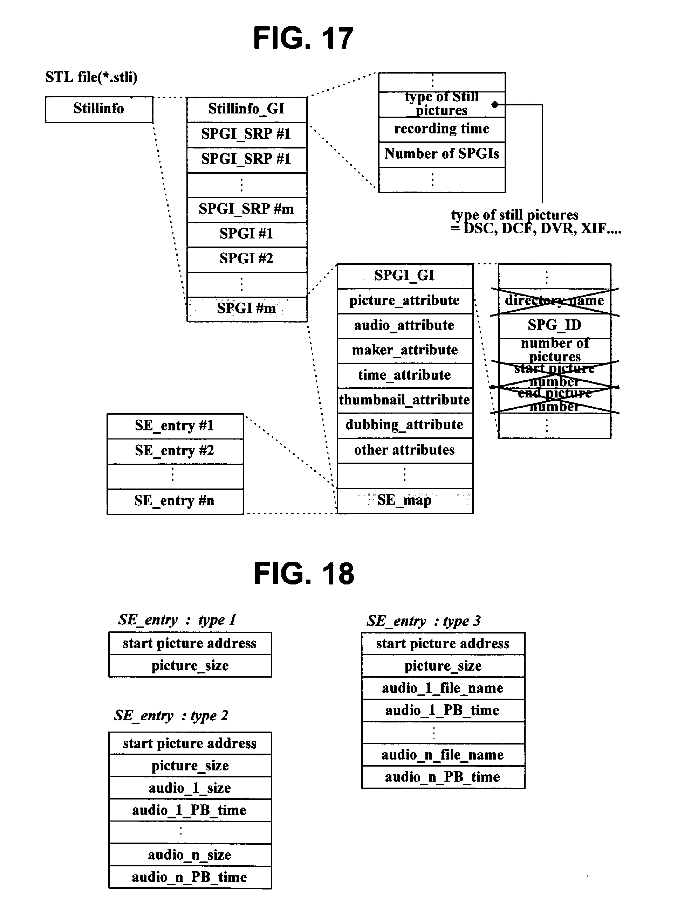

The fifth embodiment is independent of a file system handling recorded files because a filename is not used for a file entry while the fourth embodiment is not. The SPGI general information reserved in a still-picture information file (*.stli) does not include a directory name, and a start and en end picture number as its member as shown in Fig. 17.

Each entry of the entry map, as shown in Fig. 18, consists of a start address and size of a still picture, and size and playback time of at least one associated audio data file, if any. The size of audio data can be replaced with its filename.

Needless to say, the above-explained still-picture grouping embodiments are applicable to a disk device structured differently from the disk device of Fig. 3.

The above-explained still-picture grouping method ensures a user to find easily and rapidly many still pictures that have been obtained in same photographing condition.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

Summarized, the present invention relates to a method of grouping still pictures recorded on a recording medium for the purpose of efficient management. The present method records still pictures onto a recording medium, groups the recorded still pictures based on their attributes and attributes of recorded audio data associated with respective still pictures, creates management information about each still-picture group, and writes the group management information onto the recording medium. Owing to the recorded group management information, a user can find easily and rapidly many still pictures on a recording medium that have been obtained in same photographing condition.

## Claims

1. A method of recording a still picture onto a recording medium, comprising the steps of:
(a) recording still pictures onto a recording medium, and grouping the recorded still pictures based on their attributes; and
(b) creating management information about each still-picture group, and writing the group management information onto the recording medium.

2. The method according to claim 1, wherein the recorded still pictures are named under the rule of DCF (Design rule for Camera File system) adopted by a DSC (Digital Still Camera), and are recorded under a directory that is named under the rule of DCF.

3. The method according to claim 2, wherein each directory includes at least one still-picture group.

4. The method according to one of claims 1 to 3, wherein the recorded still pictures belonging to a same group have a common string in their filenames, and said common string is written as a group identifier in said management information.

5. The method according to one of claims 1 to 4, wherein said management information includes access information and attribute information for each still-picture group, and is written in a still-picture information file and/or in a play item included in a playlist that is specified by a digital video recorder.

6. The method according to claim 5, wherein said access information includes file numbers or filenames of a start and an end picture that belong to a still-picture group.

7. The method according to claim 5 or 6, wherein said access information includes a name or pathname of a directory which a still-picture group is recorded under.

8. The method according to one of claim 1 to 7, wherein said management information includes the number of total still-picture groups.

9. The method according to claim 1, wherein the recorded still pictures are named regardless of the rule of DCF (Design rule for Camera File system) adopted by a DSC (Digital Still Camera), but are recorded under a directory that is named under the rule of DCF.

10. The method according to claim 9, wherein each directory includes a single still-picture group.

11. The method according to claim 9 or 10, wherein a full or partial name or a pathname of a directory which the recorded still pictures are written under is written as a group identifier in said management information.

12. The method according to one of claims 9 to 11, wherein each directory includes at least one still-picture group.

13. The method according to one of claims 1 to 12, wherein said management information includes for each still-picture group a file list on which all files belonging to the still-picture group are written.

14. The method according to one of claims 1 to 13, wherein said management information includes for each still-picture group an entry map in which information of all file entries belonging to the still-picture group is written.

15. The method according to claim 14, wherein each entry of the entry map includes a start address and size information of a recorded still picture.

16. The method according to claim 14 or 15, wherein each entry of the entry map further includes size information and playback time of a file having audio data associated with a still picture in same entry.

17. The method according to claim 1, wherein the recorded still pictures are named regardless of the rule of DCF (Design rule for Camera File system) adopted by a DSC (Digital Still Camera), but are recorded under a subdirectory of a directory that is named under the rule of DCF.

18. The method according to claim 17, wherein each subdirectory includes a single still-picture group.

19. The method according to claim 17 or 18, wherein a full or partial name or a pathname of the subdirectory which the recorded still pictures are written under is written as a group identifier in said management information.

20. The method according to one of claims 1 to 19, wherein the still-picture group further includes an audio data file and/or a thumbnail file associated with a still picture.

21. The method according to claim 20, wherein the audio data file and/or the thumbnail file has the same filename that an associated still picture file has.

22. The method according to one of claims 1 to 21, wherein said attribute includes a coding mode, an aspect ratio, a YCrCb sampling rate, and/or a resolution of a still picture, and a coding mode, a sampling rate, the number of channels, and/or a quantization level of audio data associated with the still picture.

23. A recording medium, including data that are recorded through the following steps of:
recording still pictures onto a recording medium, and grouping the recorded still pictures based on their attributes; and
creating management information about each still-picture group, and writing the group management information onto the recording medium.
